(19) **Europäisches Patentamt**

**European Patent Office**

**Office européen des brevets**

(11) **EP 1 245 120 B1**

(12) **EUROPEAN PATENT SPECIFICATION**

(45) Date of publication and mention
of the grant of the patent:
**28.07.2004 Bulletin 2004/31**

(21) Application number: **00976828.4**

(22) Date of filing: **02.11.2000**

(51) Int Cl.⁷: **H04N 9/28**, H04N 17/04

(86) International application number:
**PCT/US2000/030216**

(87) International publication number:
**WO 2001/039510 (31.05.2001 Gazette 2001/22)**

(54) **AUTOMATED CONVERGENCE IN A PROJECTION DISPLAY APPARATUS**

AUTOMATISCHE KONVERGENZ IN EINEM PROJEKTIONSANZEIGEGERÄT

CONVERGENCE AUTOMATISEE DANS UN APPAREIL D'AFFICHAGE PAR PROJECTION

(84) Designated Contracting States:
**DE FR GB IT**

(30) Priority: **22.11.1999 US 166816 P**

(43) Date of publication of application:
**02.10.2002 Bulletin 2002/40**

(73) Proprietor: **Thomson Licensing S.A.**
**92648 Boulogne Cedex (FR)**

(72) Inventors:
• **GEORGE, John, Barrett**
**Carmel, IN 46033-4410 (US)**
• **BURNETT, Angela, Renee**
**Indianapolis, IN 46256 (US)**
• **RUNTZE, Albert**
**78052 Villingen-Schwenningen (DE)**

(74) Representative: **Rossmanith, Manfred, Dr.**
**Deutsche Thomson-Brandt GmbH**
**European Patent Operations**
**Karl-Wiechert-Allee 74**
**30625 Hannover (DE)**

(56) References cited:
**EP-A- 0 852 447**          **EP-A- 0 855 841**
**US-A- 5 282 033**

**Description**

This invention relates to the field of video projection display, and in particular to the determination of convergence errors at a projected image center.

BACKGROUND OF THE INVENTION

In a projection video display, geometrical raster distortions result from the physical placement of the cathode ray display tubes. Such raster distortions are exacerbated by the use of cathode ray tubes with curved, concave display surfaces and the inherent magnification in the optical projection path. The projected image is composed of three scanning rasters which are required to be in register one with the other on a viewing screen. The precise overlay of the three projected images requires the adjustment of multiple waveforms to compensate for geometrical distortion and facilitate the superimposition of the three projected images. However, manual alignment of multiple waveforms is labor intensive during manufacturing, and without the use of sophisticated test equipment may preclude setup at a field or user location.

European Patent Application EP O 852,447 A2 teaches a method for adjusting convergence in a projection television receiver. The projection display screen includes photo sensors which are illuminated by projected monochrome markers. For various reasons the exact positioning of the projected marker on to the middle of the sensor is not achieved. A method is disclosed in which the marker is manipulated to approach the photo sensor position from opposite directions in both horizontal and vertical directions. Marker movement values are determined for sensor illumination from each direction. These sensor illumination values are then averaged to provide a calculated value which positions the marker exactly at the photo sensor center.

Applicants are directed to field adjustment which is frequently required as a consequence of display relocation which changes the direction and intensity of the Earth's magnetic field incident on the display. Such geomagnetic fields introduce some display image rotation but mainly cause a rectilinear movement of the entire picture. Thus an automated convergence system is disclosed which simplifies manufacturing alignment and facilitates field location adjustment. An automated alignment system may employ raster edge measurement at peripheral screen locations in order to determine raster size and convergence. However, errors in the center screen region are not measured, since a center screen sensor is, for obvious reasons, undesirable. Thus an automated convergence system may employ a correction array (3 X 3) of convergence error values, determined at the peripheral screen locations, with a center screen convergence error value of zero.

SUMMARY OF THE INVENTION

Although a geomagnetic field introduces some display image rotation, the field mainly results in a rectilinear movement of the entire picture. Thus because this image displacement is consistent over the whole image an average correction value can be computed for use at the screen center. In accordance with an inventive arrangement an automatic method determines a convergence error at a center of a projection screen having a plurality of photosensors that can be illuminated by a marker. The method comprises the steps of moving the marker towards a first photosensor of the plurality until the photosensor is illuminated by the marker. The marker is moved towards a second photosensor of the plurality until the second photosensor is illuminated by the marker. A variable defines the movement of each marker to illuminate the first and second photosensors. An average variable is calculated from each variable related to moving of the markers to illuminate the first and second photosensors.

BRIEF DESCRIPTION OF THE DRAWINGS

FIGURE 1A is a simplified front view of a projection video display.
FIGURE 1 B is a view of a projection video display showing a convergence pattern
FIGURE 2 is a simplified block diagram of a video image projection display apparatus including advantageous features.
FIGURE 3, 4 and 5 are flow charts showing inventive automated edge and error detection sequences.

DETAILED DESCRIPTION

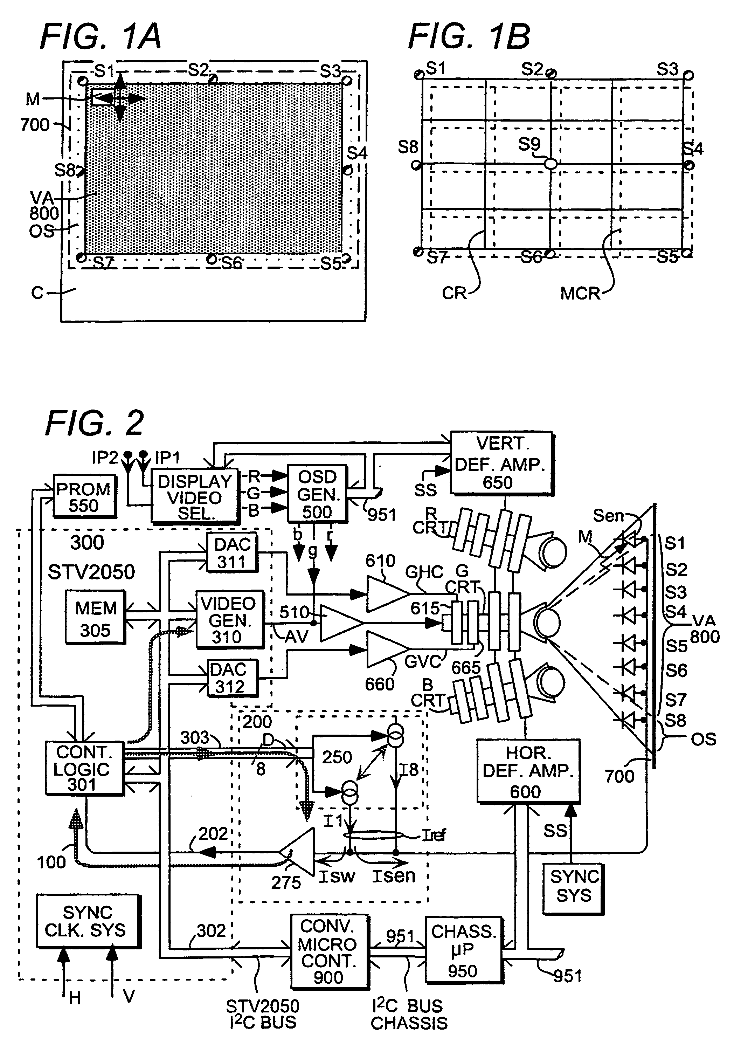

FIGURE 1A illustrates a front view of a video projection display apparatus. The projection display comprises a plurality of cathode ray tubes with raster scanned images which are projected on to screen 700. A cabinet supports and surrounds screen 700 and provides a picture display area 800 which is slightly smaller than the screen. Screen 700 is depicted with a broken line to indicate an edge area which is concealed within cabinet C and which may be illuminated with raster scanned images when operated in an overscan mode as indicated by area OS. Photo sensors are located adjacent to the periphery of screen 700 within the concealed edge area and outside viewed area 800. Eight sensors are shown in FIGURE 1A, having positions on a measurement grid, not shown, which provides measurement at the corners and at the centers of the screen edges. Thus with these grid located sensor positions it is possible to measure a correspondingly formatted electronically generated test pattern, for example peak video value block M, to determine picture width and height and certain geometric errors, for example, rotation, bow, trapezium, pincushion etc., and thereby align the displayed images to be superimposed one with the other over the whole of the screen area. Measurements are performed in both horizontal and vertical directions in each of the three projected color images thus yielding at least forty eight measured values.

Any physical relocation or orientation of the display will produce a translational or rotational picture position error. In FIGURE 1B an exemplary test pattern MCR, depicted by the dashed lines is shown displaced from an aligned position as depicted by solid lines CR. The displayed picture shape can be corrected using a 3 by 3 matrix calculation. In FIGURE 1B a center screen sensor S9 is depicted to signify an impractical condition where positional data is obtained from this screen location. However, such a center screen position would block normal picture projection hence theoretical sensor S9 cannot be employed as depicted. Thus without a center screen sensor, there is no error information and the center matrix error value is assumed to be zero. This lack of center error information results in the display edges being corrected but with any initial error remaining at the screen center due to the zero matrix value. This lack of a center sensor introduces a requirement for manual touch up adjustment of the center screen convergence of red and blue images to green image. In addition the lack of a center measurement results in some geometric distortion of the green display image because errors in the center are not corrected and can be exacerbated by correction at the edges.

As described previously, following relocation of a magnetically deflected display apparatus the displayed image is subject to movement or unwanted displacement. Such apparatus relocation changes the direction and intensity of the Earth's magnetic field which may introduce some display image rotation but mainly causes rectilinear movement of the entire picture. Image displacement is consistent over the whole display image area thus average correction values to be computed for use as a center screen value in the correction matrix.

The theoretical center screen sensor S9 shown in FIGURE 1 B is clearly impractical and cannot be employed, however, positional data for this location is advantageously derived by interpolation. A center screen horizontal value is calculated from an average of the horizontal correction values determined by sensors S2 and 56, which are located respectively at the center of the screen top edge, and the center of the screen bottom edge. A center vertical value is calculated in a similar manner from an average of the vertical correction values determined by sensor 58, located at the center left screen edge, and sensor S4 located at the center right screen edge.

When the 3 x 3 matrix calculation is performed with the center error defined in this way, substantially all central rectilinear movement error and rotational error in all three colors is substantially eliminated, and in addition geometric errors in the green image are significantly reduced. Furthermore, center convergence errors of red and blue relative to green are eliminated or reduced to such a small level that no significant manual adjustment is required.

Center Offset Determination for an eight sensor automatic alignment system is performed as follows. Measurements of the horizontal and vertical offsets from nominal sensor positions are performed, with an interpolation algorithm applied to the convergence values to compensate for raster shifts and rotation due to the influence of geomagnetic magnetic fields. The use of sensors at the screen periphery permit measurement of the display image at the screen edge. Thus horizontal and vertical offsets, or placement errors from nominal sensor locations are measured at sensors S1- S8 for each color (red, green and blue). However, since there is no sensor S9, for the center position, an approximation for the missing center offset is advantageously derived by averaging the measured, co-linear horizontal and vertical offsets. An average horizontal center offset (Have) is derived from offset values measured at sensor positions S2 and S6,

where $S9(Have) = (S2val + S6val)/2$.

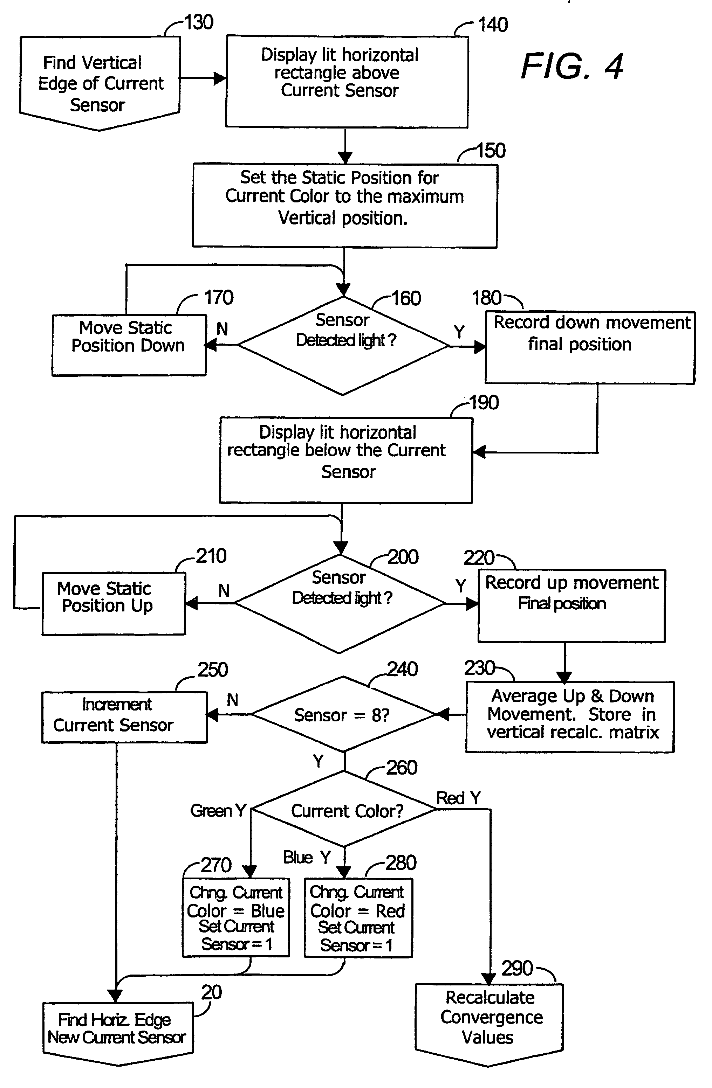

As a consequence CRT positions within the apparatus, geomagnetic related shift is substantially rectilinear, hence this average center value provides a reasonable approximation for a horizontal center offset. In the same way an average vertical offset value (Vave) is derived from sensors S4 and S8,

where $S9(Vave) = (S4val + S8val)/2$,

which provides a reasonable approximation of the vertical center offset. The use of average center values ensures that in cases of raster shifts, noticeable geometrical distortion is substantially eliminated and manual touch up adjustment after auto convergence is largely obviated. A high-level flow chart of the offset (edge) detection process is shown in FIGURES 4, 5, and 6.

Operation of the measurement and alignment system will be explained with reference to FIGURE 2 which depicts in block diagram form, part of a raster scanned video projection display. In Figure 2 three cathode ray tubes, R, G and B form raster scanned monochromatic color images which are directed through individual lens systems to converge and form a single display image 800 on screen 700. Each cathode ray tube is depicted with four coil sets which provide horizontal and vertical deflection and horizontal and vertical convergence. The horizontal deflection coil sets are driven by a horizontal deflection amplifier 600 and vertical deflection coil sets are driven by a vertical deflection amplifier 650. Both horizontal and vertical deflection amplifiers are driven with deflection waveform signals that are controlled in amplitude and waveshape via data bus 951 and synchronized with the signal source selected for display. Exemplary green channel horizontal and vertical convergence coils 615 and 665 respectively, are driven by amplifiers 610 and 660 respectively, which are supplied with convergence correction waveform signals. The correction waveform signals GHC and GVC may be considered representative of DC and AC convergence signals, for example static and dynamic convergence. However, these functional attributes may be facilitated, for example by modifying all measurement location addresses by the same value or offset to move the complete raster and achieve an apparent static convergence or centering effect. Similarly, a dynamic convergence effect may be produced by modification of the location address of a specific measurement location. Correction waveform signals GHC and GVC for the green channel are generated by exemplary digital to analog converters 311 and 312 which convert digital values read from memory 550.

An input display signal selector selects, by means of bus 951, between two signal sources IP1 and IP2, for example a broadcast video signal and an SVGA computer generated display signal. Video display signals RGB, are derived from the display video selector and electronically generated message information, for example user control information, display setup and alignment signals and messages generated responsive to commands from controllers 301, 900 and 950 coupled via buses 302 and 951, may be combined by on screen display generator 500. During automated sensitivity calibration or convergence alignment, controller 900 sends commands via a data bus 302 to controller 301 which instructs video generator 310 to generate an exemplary green channel calibration video test signal AV comprising an exemplary black level signal with a rectangular block M having a predetermined video amplitude value. Controllers 900 and 301 also position block M to illuminate exemplary sensor S1 by determining horizontal and vertical timing to position block M within the scanned display raster or by moving the scanned raster, or a part of the scanned raster containing the marker block M. Green channel test signal AV is output from IC 300 and combined at amplifier 510, with the green channel output signal from on screen display generator 500. Thus, the output signal from amplifier 510 is coupled to exemplary green cathode ray tube GCRT, and may include display source video and or OSD generated signals and or IC 300 generated calibration video test signals AV.

Controller 301 also executes a program stored in program memory 308 which comprises various algorithms. To facilitate an initial setup adjustment controller 301 outputs a digital word D on data bus 303, which is coupled to a controllable current source 250. The digital word D represents a specific current to be generated by current source 250 and supplied to sensors S1 - 8 and sensor detector 275.

To facilitate adjustment and alignment of the three color images, setup block M is generated as described previously and coupled to exemplary green CRT. In FIGURE 1 test pattern, block M is shown approaching sensor S1, and as previously mentioned each sensor may be illuminated by the timed generation of the marker block within a video signal projected with an overscaned raster, or by positioning the scanned raster such that marker block M lights sensor S1. With certain display signal inputs, for example computer display format signals, substantially all of the scanned area can be utilized for signal display thus operation with an overscaned raster is largely precluded. Hence under this substantially zero overscan condition exemplary sensor S1 may be illuminated by raster positioning of block M or by temporary expansion of the picture size. Clearly, individual sensor illumination may be facilitated with a combination of both video signal timing, raster positioning and raster size change.

With reference to FIGURE 2, video generator 310 is instructed by control logic 301 to generate an exemplary green video block M having an initial non-peak video value and positioned on a substantially black or black level background. Similar video blocks with non-peak video values may be generated in each color channel, which when generated simultaneously and superimposed at the screen produce a white image block on a substantially black background. Thus, an exemplary green block M is generated by video generator 310 and coupled via amplifier 510 to the green CRT. The video generator 310 is controlled by the micro controller 301 to generate the green block M at a horizontal and vertical screen position such that a specific sensor, for example, sensor S1, is illuminated by green light from block M. Illumination of the sensor results in a photo generated current Isen, as shown in FIGURE 2.

Widely differing photo generated sensor currents are advantageously compensated, calibrated and measured by means of control loop 100 depicted in FIGURE 2. Sensor detector 275 is depicted in circuit block 200 of FIGURE 2. In simple terms a reference current Iref is generated by a digitally controlled current source 250. The reference current is supplied to both exemplary opto sensor S1 and sensor detector 275. In the absence of sensor illumination, sensor S1, represents a high impedance and consequently diverts an insignificant current, Isen, from reference current Iref. Thus the majority of reference current Iref, is coupled to sensor detector 275 as current Isw. Current Isw biases detector 275 such that the output state is low, which is chosen to represent an unlit or unilluminated sensor. When sensor S1 is illuminated, photo generated charge causes the sensor to present a lower impedance and shunt a greater current Isen, from reference current Iref, thus diverting current Isw from sensor detector 275. At a particular illumination level, sensor S1 diverts sufficient current from sensor detector 275 to cause it to switch off and assume a high, nominally supply voltage potential, which is chosen to be indicative of a lit or illuminated sensor. The output from sensor detector 275 is positive going pulse signal 202 which is a coupled to an input of digital convergence IC STV2050. The rising edge of pulse signal 202 is sampled which causes horizontal and vertical counters to stop thus providing counts which determine where in the measurement matrix the lit sensor occurred.

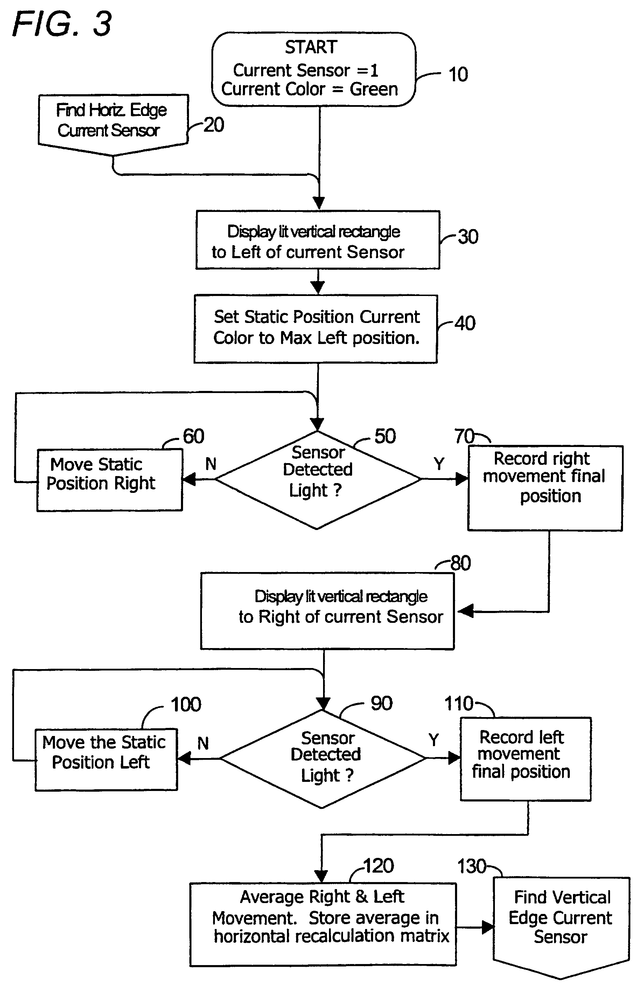

FIGURE 3 is a flow chart illustrating an exemplary sequence for determining a horizontal raster position relative to a fixed photo sensor. The sequence is initiated at step 10 where sensor 1 is selected as the current sensor and the green channel as the current channel. Step 20 requests determination of a marker horizontal edge by the current sensor in the current channel. A marker or vertical rectangle is generated and projected at step 30 to illuminate an area to the left of the current sensor. At step 40 the static position, for example H shift, for the current color, green is set to the maximum left position and at step 50 the photo sensor is tested to determine the presence or absence of illumination by the marker rectangle. A NO at step 50 initiates, at step 60, a move or change in the static position to the right which is again tested at step 50. This progressive rightward movement looping sequence continues until step 50 tests YES whereupon the value or movement position which resulted in sensor illumination is recorded or stored at step 70.

The preceding sequence is repeated for a marker rectangle approaching the sensor from the right side. Step 80 displays the marker illumination to the right side of the sensor and the sensor is tested at step 90 to determine illumination by the marker. A NO at step 90 initiates, at step 100, a move or change in the static position in the left direction which is again tested at step 80. The loop formed by steps 90 and 100 continues until the sensor is lit and step 90 tests YES which in turn results in step 110 recording the movement value that caused sensor detection. The stored or recorded left and right movement values which caused sensor detection are processed to form an average horizontal value at step 120 which is used in the correction matrix. Following this sequence of horizontal position measurements a similar sequence is performed in the vertical raster direction and is initiated at step 130.

The marker rectangle is generated and positioned above the current sensor at step 140. The static vertical position for the current color is set to a maximum value at step 150 and the sensor is tested at step 160 for illumination by the marker. A NO at step 160 results in the static position of the marker being moved downward by step 170, re-tested at step 160 and continuing downward movement until step 160 tests YES. A YES at step 160 causes the movement value that resulted in sensor detection to be recorded or stored at step 180. The marker is then repositioned below the current sensor at step 190 and is marker position is then tested at step 200 for sensor illumination by the marker. A NO at step 200 results in the marker being moved in an upward direction at step 210 and re-tested at step 200. This movement loop continues until the sensor is illuminated by the marker and step 200 indicates YES causing the movement value to be stored or recorded at step 220. The two stored vertical movement values which caused sensor detection are averaged to form a vertical value at step 230 and stored for use in the 3 x 3 convergence correction matrix.

At step 240 a test is performed to determine if all 8 sensor positions have been measured, where a NO increments the current sensor number by one count at step 250, and initiates determination of a horizontal edge by returning to step 20. Thus the sequence formed by steps 10 - 250 measure raster placement errors in both horizontal and vertical raster scan directions for each sensor position with an average error value calculated and stored. Hence when step 240 tests YES all sensor positions have been measured, averaged and stored. The YES at test 240 causes a further test to be performed at step 260 which determines in which color the completed measurement sequence was performed. Since step 10 initiated the measurement sequence in the green channel, test 260 will indicate GREEN YES which in turn, at step 270, changes the current channel to BLUE and sets the current sensor to 1. Following step 270 the sequence returns to step 20 to determine a horizontal edge in the blue channel. As described previously the sequence of steps 10 - 250 cause each sensor position to be measured with an average value established, and stored, for raster placement errors in both horizontal and vertical raster scan directions. When step 240 tests YES all sensor positions have been measured, averaged and stored and step 260 determines which color has been measured. Since step 270 changed the CURRENT color to BLUE, step 260 will indicate BLUE YES which in turn at step 280, changes the current channel to RED and sets the current sensor to 1. The sequence then returns to step 20 for horizontal edge determination in the red channel. As described previously steps 10 - 250 are performed 16 times to measure and store positional errors for all sensor positions in both horizontal and vertical directions. Finally when step 260 tests RED YES, all 8 sensors have been measured in both horizontal and vertical directions for all three colors yielding 48 stored average raster placement error values.

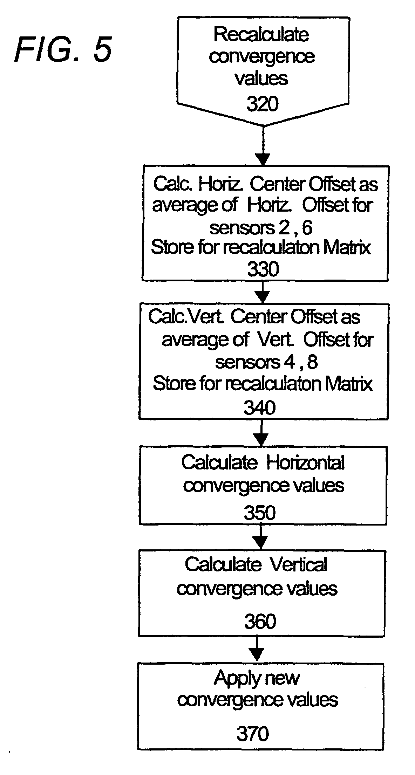

These stored error values are applied to the 3 x 3 convergence recalculation matrix described previously and illustrated in the sequence shown in FIGURE 5. Step 320 initiates convergence recalculation with step 330 advantageously forming an average horizontal offset error for the absent center screen sensor S9. This average horizontal center offset (Have) is derived, as has been described, by averaging the stored, averaged offset values measured at steps 120 and 230 for sensor positions S2 and S6 in each color,

where $S9(Have) = (S2val + S6val)/2$.

These average horizontal center offset values are then stored for subsequent use. This advantageous process is repeated at step 340 to establish a center average vertical offset error value (Vave) from averaged position errors values for sensors S4 and S8,

where S9(Vave) = (S4val + S8val)/2.

These calculated average center screen values are stored for subsequent use in a curve fitting calculation to determine horizontal and vertical convergence waveform values at steps 350 and 360 respectively. At step 370 new convergence signals, needed to restore a converged picture are added to the current values and applied to horizontal and vertical convergence coils for example exemplary green coils 615 and 665.

The objective of the curve fitting calculation performed in steps 350 and 360 is generate waveforms which pass through the measured and calculated co-linear horizontal and vertical offset values. The addition of the curves to the existing convergence values will then restore the picture to a converged condition. Such curve fitting calculations are known but will now be described in simplified terms.

As mentioned with respect to FIGURE 1B, sensors S1 - S8 are located on an exemplary grid with coordinates as shown in exemplary TABLE I

TABLE I

| Sensor # | H coordinate | V coordinate |
|----------|--------------|--------------|
| 1 | 1.25 | 0.25 |
| 2 | 8 | 0.25 |
| 3 | 14.75 | 0.25 |
| 4 | 14.75 | 6 |
| 5 | 14.75 | 11.75 |
| 6 | 8 | 11.75 |
| 7 | 1.25 | 11.75 |
| 8 | 1.25 | 6 |

For example the co-linear top horizontal row of sensors, S1, S2, S3 each have the same vertical ordinate, (0.25). However, measurement of the actual raster positions provides offsets from the physical sensor location. Thus a correction waveform is required that will pass through each measurement location and when applied to the current convergence values will cause a horizontal raster line substantially overlay the co-linear top edge sensors, S1, S2, S3. A polynomial curve fitting algorithm is used to generate correction values for each cross point of the exemplary grid. A second order or parabolic function is employed to form a curve which passes through the three measured co-linear points. The input variable data for this calculation are the delta or offset values measured at the 8 sensor positions and the advantageously averaged center screen or ninth sensor value. The calculation is performed in the horizontal and vertical directions for each of the three colors. At the top, bottom and sides of the picture, offset values have been determined for each group of three co-linear sensor locations. Thus a parabolic wave form can be generated which will pass through the delta or offsets measured at these locations. However, as has been described, derived offset values representative of center screen errors are used in place of the absent sensor S9. For example

| Base point | Sensor 8 | *Sensor 9* | Sensor 4 |
|------------|----------|-----------|----------|
| H value | 1.25 | 8 | 14.75 |
| $\Delta$ value | $\Delta$S8 | $\Delta$S9 | $\Delta$S4 |

A general equation for a parabolic function has the form : $y = a_0 x^2 + a_1 x + a_2$.

where y corresponds to the $\Delta$ value, X corresponds to the H value, and $a_x$ is unknown. A matrix equation is shown below and may be solved to determine coefficients $a_0$, $a_1$, $a_2$.

$$\begin{bmatrix} \Delta S8 \\ \Delta S9 \\ \Delta S4 \end{bmatrix} = \begin{bmatrix} 1.25^2 & 1.25 & 1 \\ 8^2 & 8 & 1 \\ 14.75^2 & 14.75 & 1 \end{bmatrix} \begin{bmatrix} a_0 \\ a_1 \\ a_2 \end{bmatrix}$$

These coefficients can then applied to generate a parabolic waveform which will pass through the measured offsets and when applied to the convergence circuitry provides a converged display image.

**Claims**

1. A method for automatically determining a convergence error at the center of a projection screen having a plurality of photosensors that can be illuminated by a marker, the method comprising the steps of:

moving said marker towards a first photosensor of said plurality until said first photosensor is illuminated by said marker,
moving said marker towards a second photosensor of said plurality located adjacent a raster edge opposite said first photosensor until said second photosensor is illuminated by said marker;
defining a variable for each said moving of said marker to illuminate said first and second photosensors; **characterized in that** the method further comprises the steps of:

calculating an average variable from each said variable related to said moving of said markers to illuminate said first and second photosensors; and
using said calculated average variable to represent a center screen raster placement error.

**2.** The method of claim 1, wherein said moving steps comprise:

> moving said marker in a first direction towards said first photosensor until said first photosensor is illuminated and moving said marker in a second direction, opposite to said first direction until said first photosensor is illuminated; and, moving said marker in a first direction towards said second photosensor until said second photosensor is illuminated and moving said marker in a second direction, opposite to said first direction until said second photosensor is illuminated.

**3.** The method of claim 2, wherein said moving steps comprise:

> calculating an average variable for moving said marker to illuminate said first photosensor in said first and second directions; and, calculating an average variable related to moving said marker to illuminate said second photosensor, in said first and second directions.

**4.** The method of claim 1, comprising the step of moving said marker towards said first photosensor in a horizontal direction.

**5.** The method of claim 1, comprising the step of moving said marker towards said first photosensor in a vertical direction.

**6.** The method of claim 1, comprising the step of moving said marker towards said second photosensor in a vertical scanning direction.

**7.** The method of claim 1, comprising the step of moving said marker towards said second photosensor in a horizontal scanning direction.

**8.** The method of claim 1, wherein said using step comprises the additional step of:

> generating a convergence correction value for said center screen using said calculated average variable.

**9.** An automatic method for determining a raster placement error at the center of a projection screen having a plurality of screen edge photosensors that can be illuminated by a marker, the method comprising the steps of:

> moving said marker towards each photosensor of said plurality photosensors until each said photosensor is illuminated by said marker, storing a movement variable for each said photosensor of said plurality photosensors which caused illumination of each said photosensor of said plurality of photosensors; **characterized by** the step of:

> selecting a pair of said stored movement variables and calculating an average movement variable representative of a movement variable defining a position substantially equidistant between photosensors from which said selected pair of stored movement variables were derived.

**10.** The automatic method of claim 9, wherein said selecting step comprises the step of:

> selecting a pair of said stored movement variables derived from photosensors co-linearly located with opposite edge locations.

**11.** The automatic method of claim 10, wherein said selecting step comprises the step of:

> selecting a pair of said stored movement variables derived from photosensors, co-linearly located with opposite center edge locations.

**12.** The method of claim 9, wherein said moving step comprises:

> moving said marker in a first direction towards each said photosensor until each said photosensor is illuminated and moving said marker in a second direction, opposite to said first direction until each said photosensor is illuminated.

**13.** The method of claim 9, wherein said storing step comprises:

> storing for each said photosensor of said plurality photosensors movement variables which caused illumination of each said photosensor in said first and said opposite directions.

**14.** The method of claim 13, wherein said storing step comprises:

> averaging and storing movement variables which caused illumination of each said photosensor in said first and said opposite directions.

**Patentansprüche**

**1.** Verfahren zum automatischen Bestimmen eines Konvergenzfehlers in der Mitte eines Projektionsschirms mit mehreren Fotosensoren, die durch eine Markierung angestrahlt werden können, wobei das Verfahren die folgenden Schritte umfaßt:

Bewegen der Markierung zu einem ersten der mehreren Fotosensoren, bis der erste Fotosensor von der Markierung angestrahlt wird, Bewegen der Markierung zu einem zweiten der mehreren Fotosensoren, angeordnet neben einer Rasterkante gegenüber dem ersten Fotosensor, bis der zweite Fotosensor durch die Markierung angestrahlt wird; Definieren einer Variablen für jede derartige Bewegung der Markierung zum Anstrahlen des ersten und zweiten Fotosensors; **dadurch gekennzeichnet, daß** das Verfahren weiterhin die folgenden Schritte umfaßt:

Berechnen einer Durchschnittsvariablen von jeder derartigen Variablen in Beziehung auf das Bewegen der Markierungen zum Anstrahlen des ersten und zweiten Fotosensors und Verwenden der berechneten Durchschnittsvariablen, um einen Schirmmittenrasterplazierungsfehler darzustellen.

2. Verfahren nach Anspruch 1, wobei die Bewegungsschritte folgendes umfassen:

Bewegen der Markierung in einer ersten Richtung zu dem ersten Fotosensor, bis der erste Fotosensor angestrahlt wird, und Bewegen der Markierung in einer der ersten Richtung entgegengesetzten zweiten Richtung, bis der erste Fotosensor angestrahlt wird; und Bewegen der Markierung in einer ersten Richtung zu dem zweiten Fotosensor, bis der zweite Fotosensor angestrahlt wird, und Bewegen der Markierung in einer der ersten Richtung entgegengesetzten zweiten Richtung, bis der zweite Fotosensor angestrahlt wird.

3. Verfahren nach Anspruch 2, wobei die Bewegungsschritte folgendes umfassen:

Berechnen einer Durchschnittsvariablen zum Bewegen der Markierung zum Anstrahlen des ersten Fotosensors in der ersten und zweiten Richtung und Berechnen einer Durchschnittsvariablen im Hinblick auf das Bewegen der Markierung zum Anstrahlen des zweiten Fotosensors in der ersten und zweiten Richtung.

4. Verfahren nach Anspruch 1, mit dem Schritt des Bewegens der Markierung zu dem ersten Fotosensor in einer horizontalen Richtung.

5. Verfahren nach Anspruch 1, mit dem Schritt des Bewegens der Markierung zu dem ersten Fotosensor in einer vertikalen Richtung.

6. Verfahren nach Anspruch 1, mit dem Schritt des Bewegens der Markierung zu dem zweiten Fotosensor in einer vertikalen Abtastrichtung.

7. Verfahren nach Anspruch 1, mit dem Schritt des Bewegens der Markierung zu dem zweiten Fotosensor in einer horizontalen Abtastrichtung.

8. Verfahren nach Anspruch 1, wobei der Verwendungsschritt den folgenden zusätzlichen Schritt umfaßt:

Erzeugen eines Konvergenzkorrekturwerts für die Schirmmitte unter Verwendung der berechneten Durchschnittsvariablen.

9. Automatisches Verfahren zum Bestimmen eines Rasterplazierungsfehlers in der Mitte eines Projektionsschirms mit mehreren Schirmrandfotosensoren, die durch eine Markierung angestrahlt werden können, wobei das Verfahren die folgenden Schritte umfaßt:

Bewegen der Markierung zu jedem Fotosensor der mehreren Fotosensoren, bis jeder derartige Fotosensor von der Markierung angestrahlt wird, Speichern einer Bewegungsvariablen für jeden derartigen Fotosensor der mehreren Fotosensoren, der eine Anstrahlung jedes derartigen Fotosensors der mehreren Fotosensoren verursachte;

**gekennzeichnet durch** den folgenden Schritt:

Auswählen eines Paars der gespeicherten Bewegungsvariablen und Berechnen einer durchschnittlichen Bewegungsvariablen, die für eine Bewegungsvariable repräsentativ ist, die eine zwischen Fotosensoren im wesentlichen äquidistante Position definiert, von der das ausgewählte Paar gespeicherter Bewegungsvariablen abgeleitet wurde.

10. Automatisches Verfahren nach Anspruch 9, wobei der Auswahlschritt den folgenden Schritt umfaßt:

Auswählen eines Paars der gespeicherten Bewegungsvariablen, die von Fotosensoren abgeleitet wurden, die kolinear mit gegenüberliegenden Kantenstellen angeordnet sind.

11. Automatisches Verfahren nach Anspruch 10, wobei der Auswahlschritt den folgenden Schritt umfaßt:

Auswählen eines Paars der gespeicherten Bewegungsvariablen, die von Fotosensoren abgeleitet wurden, die kolinear mit gegenüberliegenden Kantenmittenstellen angeordnet sind.

**12.** Verfahren nach Anspruch 9, wobei der Bewegungsschritt folgendes umfaßt:

Bewegen der ersten Markierung in einer ersten Richtung zu jedem Fotosensor, bis jeder derartige Fotosensor angestrahlt wird, und Bewegen der zweiten Markierung in einer der ersten Richtung entgegengesetzten zweiten Richtung, bis jeder derartige Fotosensor angestrahlt wird.

**13.** Verfahren nach Anspruch 9, wobei der Speicherungsschritt folgendes umfaßt:

Speichern der mehreren Fotosensor-Bewegungsvariablen für jeden derartigen Fotosensor, die eine Anstrahlung jedes derartigen Fotosensors verursachten, in der ersten und der entgegengesetzten Richtung.

**14.** Verfahren nach Anspruch 13, wobei der Speicherungsschritt folgendes umfaßt:

Mittelwertbildung und Speichern von Bewegungsvariablen, die eine Anstrahlung jedes derartigen Fotosensors verursachten, in der ersten und der entgegengesetzten Richtung.

## Revendications

**1.** Méthode pour déterminer de façon automatique une erreur de convergence au centre d'un écran de projection possédant une pluralité de capteurs optiques qui peuvent être éclairés par un marqueur, la méthode comprenant les étapes :

de déplacement dudit marqueur vers un premier capteur optique de ladite pluralité jusqu'à ce que ledit premier capteur optique soit éclairé par ledit marqueur,
de déplacement dudit marqueur vers un deuxième capteur optique de ladite pluralité située à proximité d'un bord de trames opposé audit premier capteur optique jusqu'à ce que ledit deuxième capteur optique soit éclairé par ledit marqueur,
de définition d'une variable pour chacun desdits déplacements dudit marqueur pour éclairer lesdits premier et deuxième capteurs optiques ; **caractérisée en ce que** la méthode comprend également les étapes :

de calcul d'une variable moyenne à partir de chacune desdites variables liées audit déplacement desdits marqueurs pour éclairer lesdits premier et deuxième capteurs optiques ; et

d'utilisation de ladite variable moyenne calculée pour représenter une erreur de placement de trames de l'écran central.

**2.** Méthode de la revendication 1, où lesdites étapes de déplacement comprennent :

le déplacement dudit marqueur dans une première direction vers ledit premier capteur optique jusqu'à ce que ledit premier capteur optique soit éclairé et le déplacement dudit marqueur dans une deuxième direction, à l'opposé de ladite première direction jusqu'à ce que ledit premier capteur optique soit éclairé ;
et,
le déplacement dudit marqueur dans une première direction vers le deuxième capteur optique jusqu'à ce que ledit deuxième capteur optique soit éclairé et le déplacement dudit marqueur dans une deuxième direction, à l'opposé de ladite première direction jusqu'à ce que ledit deuxième capteur optique soit éclairé.

**3.** Méthode de la revendication 2, où lesdites étapes de déplacement comprennent :

le calcul d'une variable moyenne pour le déplacement dudit marqueur afin d'éclairer ledit premier capteur optique dans lesdites première et deuxième directions ; et,

le calcul d'une variable moyenne liée au déplacement dudit marqueur afin d'éclairer ledit deuxième capteur optique, dans lesdites première et deuxième directions.

**4.** Méthode de la revendication 1, comprenant l'étape de déplacement dudit marqueur vers ledit premier capteur optique dans une direction horizontale.

**5.** Méthode de la revendication 1, comprenant l'étape de déplacement dudit marqueur vers ledit premier capteur optique dans une direction verticale.

**6.** Méthode de la revendication 1, comprenant l'étape de déplacement dudit marqueur vers ledit deuxième capteur optique dans une direction de balayage verticale.

**7.** Méthode de la revendication 1, comprenant l'étape de déplacement dudit marqueur vers ledit deuxième capteur optique dans une direction de balayage horizontale.

8.  Méthode de la revendication 1, où ladite étape d'utilisation comprend l'étape supplémentaire de :

    génération d'une valeur de correction de convergence pour ledit écran central à l'aide de ladite variable moyenne calculée.

9.  Méthode automatique pour déterminer une erreur de placement de trames au centre d'un écran de projection possédant une pluralité de capteurs optiques de bord d'écran qui peuvent être éclairés par un marqueur, la méthode comprenant les étapes de :

    déplacement dudit marqueur vers chaque capteur optique de ladite pluralité de capteurs optiques jusqu'à ce que chacun desdits capteurs optiques soit éclairé par ledit marqueur, stockage d'une variable de mouvement pour chacun desdits capteurs optiques de ladite pluralité de capteurs optiques qui a produit l'éclairage de chacun desdits capteurs optiques de ladite pluralité de capteurs optiques ;

    **caractérisée par** l'étape :

    de sélection d'une paire desdites variables de mouvement stockées et de calcul d'une variable de mouvement moyenne représentative d'une variable de mouvement définissant une position substantiellement équidistante entre les capteurs optiques à partir desquels ladite paire sélectionnée de variables de mouvement stockées était dérivée.

10. Méthode automatique de la revendication 9, où ladite étape de sélection comprend l'étape de :

    sélection d'une paire desdites variables de mouvement stockées dérivées des capteurs optiques situés co-linéairement avec des emplacements de bord opposés.

11. Méthode automatique de la revendication 10, où ladite étape de sélection comprend l'étape de :

    sélection d'une paire desdites variables de mouvement stockées dérivées des capteurs optiques, situés co-linéairement avec des emplacements de bord central opposés.

12. Méthode de la revendication 9, où ladite étape de déplacement comprend :

    le déplacement dudit marqueur dans une première direction vers chacun desdits capteurs optiques jusqu'à ce que chacun desdits capteurs optiques soit éclairé et le déplacement dudit marqueur dans une deuxième direction , à l'opposé de ladite première direction jusqu'à ce que chacun desdits capteurs optiques soit éclairé.

13. Méthode de la revendication 9, où ladite étape de stockage comprend :

    le stockage de chacun desdits capteurs optiques de ladite pluralité de variables de mouvement de capteurs optiques qui a produit l'éclairage de chacun desdits capteurs optiques dans ladite première direction et ladite direction inverse.

14. Méthode de la revendication 13, où ladite étape de stockage comprend :

    le calcul de la moyenne et le stockage des variables de mouvement qui ont produit l'éclairage de chacun desdits capteurs optiques dans ladite première direction et ladite direction inverse.

FIG. 1A

FIG. 1B

FIG. 2

# FIG. 3

START
Current Sensor =1
Current Color = Green — 10

Find Horiz. Edge
Current Sensor — 20

Display lit vertical rectangle
to Left of current Sensor — 30

Set Static Position Current
Color to Max Left position. — 40

Move Static
Position Right — 60

N ← Sensor
Detected
Light ? — 50

Y → Record right
movement final
position — 70

Display lit vertical rectangle
to Right of current Sensor — 80

Move the Static
Position Left — 100

N ← Sensor
Detected
Light ? — 90

Y → Record left
movement
final position — 110

Average Right & Left
Movement. Store average in
horizontal recalculation matrix — 120

Find Vertical
Edge Current
Sensor — 130

*FIG. 4*

```
  ┌─── 130 ────┐          ┌──── 140 ─────────┐
  │ Find Vertical │        │ Display lit horizontal │
  │ Edge of Current │ ───→ │ rectangle above    │
  │ Sensor        │        │ Current Sensor    │
  └──────────────┘        └─────────┬────────┘
                                    │
                          ┌──── 150 ▼────────┐
                          │ Set the Static Position for │
                          │ Current Color to the maximum │
                          │ Vertical position.       │
                          └─────────┬────────┘
```

Find Vertical Edge of Current Sensor → Display lit horizontal rectangle above Current Sensor (130, 140)

Set the Static Position for Current Color to the maximum Vertical position. (150)

Move Static Position Down (170) ←N— Sensor Detected light? (160) —Y→ Record down movement final position (180)

Display lit horizontal rectangle below the Current Sensor (190)

Move Static Position Up (210) ←N— Sensor Detected light? (200) —Y→ Record up movement Final position (220)

Average Up & Down Movement. Store in vertical recalc. matrix (230)

Increment Current Sensor (250) ←N— Sensor = 8? (240) —Y→

Current Color? (260)

Green Y → Chng. Current Color = Blue Set Current Sensor = 1 (270)

Blue Y → Chng. Current Color = Red Set Current Sensor = 1 (280)

Red Y → Recalculate Convergence Values (290)

Find Horiz. Edge New Current Sensor (20)

*FIG. 5*

```
┌──────────────────┐
│   Recalculate    │
│   convergence    │
│     values       │
│       320        │
└──────────────────┘
          │
          ▼
┌──────────────────────────────┐
│ Calc. Horiz. Center Offset as│
│  average of  Horiz.  Offset for│
│        sensors 2 , 6         │
│ Store for recalculaton Matrix│
│            330               │
└──────────────────────────────┘
          │
          ▼
┌──────────────────────────────┐
│ Calc.Vert. Center Offset as  │
│  average of  Vert. Offset for│
│        sensors 4 , 8         │
│ Store for recalculaton Matrix│
│            340               │
└──────────────────────────────┘
          │
          ▼
┌──────────────────────────────┐
│   Calculate  Horizontal      │
│   convergence values         │
│            350               │
└──────────────────────────────┘
          │
          ▼
┌──────────────────────────────┐
│   Calculate  Vertical        │
│   convergence values         │
│            360               │
└──────────────────────────────┘
          │
          ▼
┌──────────────────────────────┐
│   Apply new                  │
│   convergence values         │
│            370               │
└──────────────────────────────┘
```